# EUROPEAN PATENT SPECIFICATION

(11) **EP 2 889 128 B1**
(45) Date of publication and mention of the grant of the patent: **11.11.2020**
(21) Application number: 12883734.1
(22) Date of filing: 27.08.2012
(51) Int. Cl.: B29C 73/16, B29L 30/00

(54) **AUTOMOBILE TIRE GLUE-WATER BOTTLE**
LEIMWASSERFLASCHE FÜR AUTOMOBILREIFEN
BOUTEILLE D'EAU CHARGÉE DE COLLE POUR PNEU D'AUTOMOBILE

(43) Date of publication of application: 01.07.2015
(73) Proprietor: Active Tools International (HK) Ltd., Causeway Bay Hong Kong (CN)
(72) Inventor: HONG, Yingchi,David, Hong Kong (CN)
(74) Representative: Epping - Hermann - Fischer
(86) International application number: PCT/CN2012/080631
(87) International publication number: WO 2014/032224

(56) References cited:
- EP-A1- 0 823 386
- EP-A2- 1 815 970
- WO-A1-2009/052576
- WO-A1-2009/052576
- CN-A- 102 602 013
- CN-U- 202 704 235
- DE-A1- 10 106 468
- JP-A- 2002 019 862
- JP-A- 2002 019 862

## Description

### FIELD OF THE INVENTION

The present invention relates to a tyre repair tool of vehicle. More specifically, the present invention relations to a sealant bottle for tyre repair of vehicle.

### BACKGROUND OF THE INVENTION

In the prior art, sealant in the sealant bottle is often pressed into a tyre under the action of the air produced by an air compressor in the process of tyre repair. After that, in order to achieve the tyre repair, the sealant can cover the inner wall of the tyre evenly while the vehicle is forwarding slowly. However, since the sealant hose inside the sealant bottle is commonly the one with smaller specific gravity, when the sealant bottle is positioned horizontally, the sealant therein cannot be fully utilized frequently. Regarding this problem, if some materials with greater specific gravity are used to make the sealant hose, its hardness is also enhanced simultaneously, in which case the sealant hose cannot bend flexibly inside the sealant bottle, whereby the sealant at the bottom side of the bottle body cannot be utilized fully either.

The patent application WO2009/052576 A1 has disclosed the preamble of claim 1 and schows an apparatus for sealing inflatable article, such as a vehicle tyre, includes a container which contains a supply of sealant compound or composition, a sealant hose arranged within the bottle body, a first bottle cap and a second bottle cap are disposed at an opening for outputting sealant of bottle body, the sealant hose is connected with a one-way valve at its one end.

### SUMMARY OF THE INVENTION

The objective of the present invention is to provide a sealant bottle for tyre repair of vehicle of which the sealant hose can bend flexibly inside the bottle body and abut against the bottom side of the bottle body all the time, aiming at the problems that the sealant inside the bottle cannot be fully utilized when the sealant bottle is positioned horizontally in the prior art.

According to an aspect of the present invention, a sealant bottle for tyre repair of vehicle is provided, which comprises a bottle body for holding sealant and a sealant hose arranged within the bottle body. A first bottle cap and a second bottle cap are disposed at an opening for outputting sealant of the bottle body, wherein the first bottle cap completely surrounds the second bottle cap, and the latter can slide within the former. The sealant within the bottle body is led out by combination of the sealant hose and a connection tube of sealant bottle passing through the second bottle cap.

The sealant hose is connected with a one-way valve at its one end. The one-way valve includes a valve body, a sealing plug and a valve cover, while the valve cover is arranged at one end of the valve body that is far away from the sealant hose. The valve body is arranged with a channel and a groove for guiding the sealant inside, wherein the latter connected to the channel is arranged at one end of the channel that is far away from the valve cover. Herein, the sealing plug is arranged in the channel and it can move therein along the axial direction of the bottle body. The one-way valve is arranged with a gravitational shell which surrounds the one-way valve.

In the above-mentioned sealant bottle for tyre repair of vehicle, the connection tube of sealant bottle is comprised of a second tube section arranged along the axial direction of the bottle body and a first tube section perpendicular to the second tube section. The second tube section passes through the second bottle cap and further connects with the sealant hose.

In the above-mentioned sealant bottle for tyre repair of vehicle, the second tube section of the connection tube of sealant bottle is provided with a retaining ring for preventing the connection tube of sealant bottle from loosening towards the outside of the bottle body in the sliding process.

In the above-mentioned sealant bottle for tyre repair of vehicle, the second bottle cap comprises a bottle cap body and a central channel arranged at the centre of the bottle cap body.

In the above-mentioned sealant bottle for tyre repair of vehicle, the central channel is inserted into the opening for outputting sealant of the bottle body. The inner surface of the bottle cap body is provided with internal threads, while the opening for outputting sealant of the bottle body is provided with external threads; wherein the internal threads are matched and connected with the external threads.

In the above-mentioned sealant bottle for tyre repair of vehicle, the gravitational shell is in threaded connection with the one-way valve.

In the above-mentioned sealant bottle for tyre repair of vehicle, the gravitational shell is connected with the sealant hose by a joint nozzle protruding from the end of the gravitational shell.

In the above-mentioned sealant bottle for tyre repair of vehicle, the inner diameter of the channel of the valve body is equal to the outer diameter of the sealing plug.

In the above-mentioned sealant bottle for tyre repair of vehicle, an end plate of the valve cover is provided with three projections. These projections are inserted into the corresponding slots at one end of the valve body that is far away from the sealant hose, so that the valve cover is connected with the valve body.

In the above-mentioned sealant bottle for tyre repair of vehicle, the bottle body also comprises an air inlet end. An opening for inputting air at the air inlet end of the bottle body is provided with a bottle stopper, while a sealing washer is further arranged between the bottle stopper and the opening for inputting air so as to prevent the leakage of the sealant.

When implementing the sealant bottle for tyre repair of vehicle of the present invention, the following advantageous effects can be obtained: the first bottle cap at the opening for outputting sealant of the bottle body is connected with the connection tube of sealant bottle, in which case the first bottle cap and the connection tube of sealant bottle can be turned collectively without turning the bottle body during the usage of the sealant bottle, thereby achieving a retractable application of the first bottle cap. Since the gravitational shell arranged at the end of the sealant hose has greater specific gravity, no matter the sealant bottle is positioned horizontally or vertically, the sealant hose can bend flexibly inside the bottle body and its end abuts against the bottom side of the bottle body all the time, so that the sealant inside the bottle body can be fully utilized. In the present invention, the one-way valve is a plug type one. It can be feedthrough smoothly for outputting the sealant under the action of air pressure, while it can seal the sealant hose very well so as to prevent the leakage of the sealant when it is unneeded to use the sealant bottle. All in all, the sealant bottle for tyre repair of the present invention is simple in structure, convenient in usage and capable of achieving a full utilization of the sealant therein.

### BRIEF DESCRIPTION OF THE DRAWINGS

The present invention will be further illustrated in detail with reference to accompanying drawings and specific embodiments. In the figures:
Figure 1 is a structural diagram for a sealant bottle for tyre repair of the present invention;
Figure 2 is an exploded diagram for the component represented by A in Figure 1;
Figure 3 is a structural diagram for a one-way valve in the present invention, wherein the one-way valve is in the state of sealing;
Figure 4 is a structural diagram for a one-way valve in the present invention, wherein the one-way valve is in the state of leading out the sealant;
Figure 5 is a structural diagram for a connection tube of sealant bottle that is assembled on the second bottle cap in the present invention; and
Figure 6 is a structural diagram for an un-contracted first bottle cap in the present invention.

### DETAILED DESCRIPTION OF THE PREFERRED EMBODIMENT

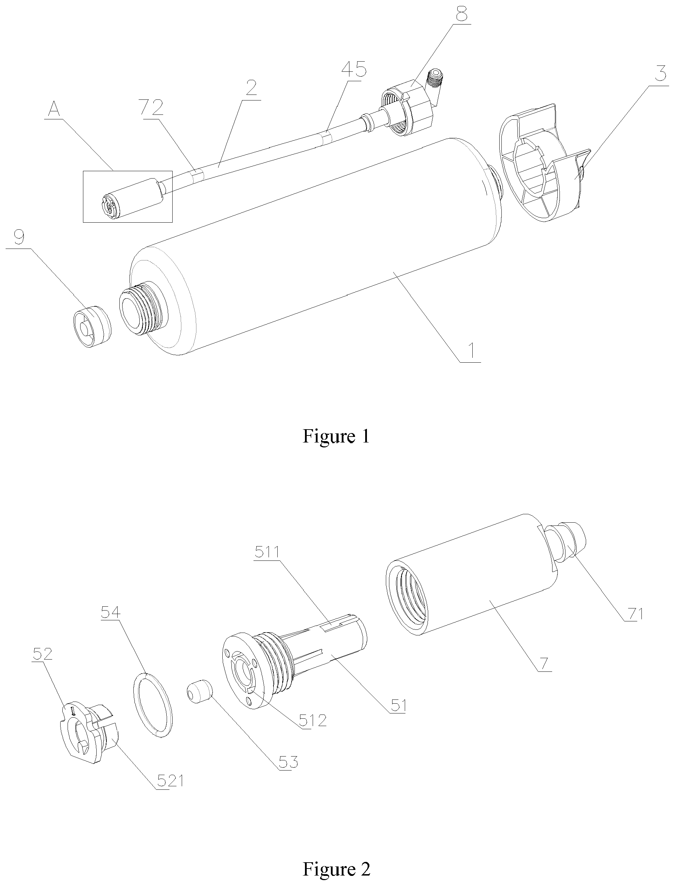

Referring to Figures 1-6, Figure 1 is a structural diagram for a sealant bottle for tyre repair provided in the present invention. In the present invention, the sealant bottle for tyre repair of vehicle comprises a bottle body 1 for holding sealant and a sealant hose 2 arranged within the bottle body 1. A first bottle cap 3 and a second bottle cap 8 are disposed at an opening for outputting sealant of the bottle body 1, wherein the first bottle cap 3 completely surrounds the second bottle cap 8. The sealant within the bottle body 1 is led out by combination of the sealant hose 2 and a connection tube of sealant bottle passing through the second bottle cap 8. The sealant hose 2 is connected with a one-way valve at one end. The one-way valve includes a valve body 51, a sealing plug 53 and a valve cover 52, while the valve cover 52 is arranged at one end of the valve body 51 that is far away from the sealant hose 2. The valve body 51 is arranged with a channel and a groove for guiding sealant 521 inside, wherein the latter connected to the channel is arranged at one end of the channel that is far away from the valve cover 52. Herein, the sealing plug 53 is arranged in the channel and it can move therein along the axial direction of the bottle body 1. The one-way valve is arranged with a gravitational shell 7 which surrounds the one-way valve.

In addition, the bottle body 1 of the sealant bottle for tyre repair of vehicle also comprises an air inlet end in the present invention, at which an opening for inputting air is provided with a bottle stopper 9. In order to ensure a full sealing of the bottle body and to prevent the sealant from leakage in the unused state, a sealing washer is further arranged between the bottle stopper 9 and the opening for inputting air.

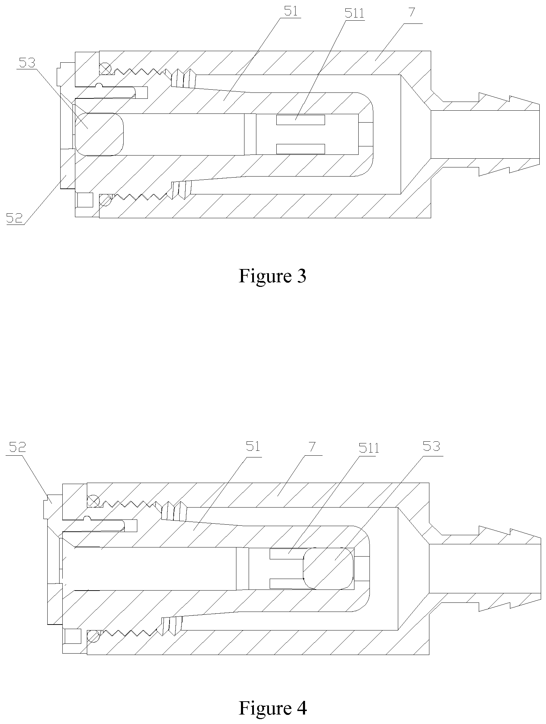

In the present invention, the working process by the cooperation of the sealant bottle for tyre repair and the air compressor is illustrated briefly as follows: (1) when the sealant bottle for tyre repair is unused, the bottle stopper 9 seals the air inlet end, and the sealing plug 53 abuts against the valve cover 52 to block the opening of the valve body 51 so that the bottle body 1 is sealed (Figure 3); (2) when the air compressor is started to input some air and the pressure increases to a certain value (2-4 bar), the bottle stopper 9 will be pressed to be open so that some air will enter the bottle body 1 and lead to a high-pressure environment therein; (3) the sealing plug 53 of the one-way valve is acted upon by the high-pressure air inside the bottle body 1 to make the sealing plug 53 no longer abut against the valve cove 52; in this case, the sealant can enter the sealant hose 2 through the one-way valve and further flows out of the bottle body 1 through the connection tube of sealant bottle (Figure 4)

The gravitational shell 7 is one of the key points of the present invention. It can be made from a variety of materials with great specific gravity, such as iron, steel and varieties of alloy. As shown in Figure 2, the gravitational shell 9 in the present invention is a hollow structure in the shape of cylinder, and it is sheathed around the one-way valve. One end of the gravitational shell 9 is provided with threads on the inner surface, and the other end thereof is formed with a protruding joint nozzle 71. Herein, the threads are used for achieve a threaded connection with the valve body 51, and the joint nozzle 71 can be inserted into the sealant hose 2 so as to be connected with the sealant hose 2.

The purpose of the gravitational shell 7 is to increase the specific gravity of the end of the sealant hose 2. In the case that the sealant hose 2 is a flexible one, no matter how the sealant bottle for tyre repair is positioned, the end of the sealant hose 2 abuts against the bottom side of the bottle body 1 all the time so as to ensure a full utilization of the sealant inside the bottle body 1. The size of the gravitational shell 7 can be set according to actual needs. As shown in Figure 1, the gravitational shell 7 surrounds the one-way valve completely; while in another implementation, it may only surround a part of the region of the one-way valve.

Also as shown in Figure 2, the one-way valve comprises the valve body 51, the valve cover 52 and the sealing plug 53. An end plate of the valve cover 52 is provided with three projections 521. These projections 521 can be inserted into the corresponding slots 512 at one end of the valve body 51 that is far away from the sealant hose 2, so that the valve cover 52 is fixedly connected with the valve body 51. A sealing ring 54 is further arranged between the valve cover 52 and the valve body 51 to ensure the sealing connection between the two. Of course, the connection between the valve body 51 and the valve cover 52 is not limited to the mode shown in the figures. In another implementation, a glue mode can be adopted to connect the valve body 51 with the valve cover 52.

Further, referring to Figures 2 -4, a channel is formed inside the valve body 51, through which the sealant can enter the sealant hose 2. In the sealing state, the sealing plug 53 is disposed at the interface between the valve body 51 and the valve cover 52, and it blocks the inlet of the channel so as to prevent the sealant from entering the channel (as shown in Figure 3). The groove for guiding sealant 511 connected to the channel is arranged at one end of the channel that is far away from the valve cover 52. Under the action of the high-pressure air, the sealing plug 53 slides in the channel until it reaches the end that is far away from the valve cover 52 (as shown in Figure 4). Herein the sealant can flow through the channel and the groove for guiding sealant 511 and further flow into the sealant hose 2. The inner diameter of the channel of the valve body 51 is equal to the outer diameter of the sealing plug 53, so that the sealing plug 53 can abut against the inner wall of the channel in the stationary and mobile states to ensure that the sealant will not leak out. The sealing plug 53 used in the present invention is made of rubber. It can be understood that the sealing plug can also be made of any other suitable materials.

At the same time, the arrangement of the sealing plug 53 can protect the storage of the sealant in high-temperature and low-temperature states to a certain extent. The air and the sealant inside the bottle may expand and/or contract under the influence of the high-temperature and/or low-temperature environments that the sealant bottle is arranged in, which cause a pressure change in the whole bottle. The sealing device of the sealant bottle in the prior art is very likely to be damaged for this reason, especially for those with a tinfoil or a film as the sealing device. In the sealant bottle for tyre repair of vehicle of the present invention, the channel inside the valve body 51 can provide some moving space for the sealing plug 53 so as to eliminate the pressure change caused by the expansion and/or contraction of the air and sealant in a proper way. During movement, the sealing plug 53 always abuts against the wall of the channel so as to ensure a sealing environment inside the whole sealant bottle.

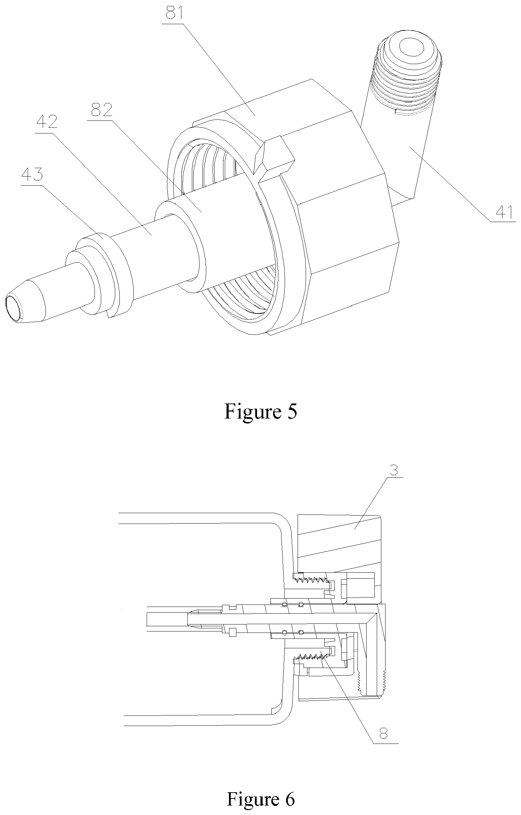

As shown in Figure 5, the second bottle cap 8 comprises a bottle cap body 81 and a central channel 82 arranged at the centre of the bottle cap body 81. The central channel 82 is inserted into the opening for outputting sealant of the bottle body 1. The inner surface of the bottle cap body 81 is provided with internal threads, while the opening for outputting sealant of the bottle body 1 is provided with external threads; wherein the internal threads are matched and connected with the external threads so as to fixedly connect the second bottle cap 8 with the bottle body 1. What is different from the existing sealant bottle for tyre repair lies in that, a first bottle cap 3 cooperating with the second bottle cap 8 is further disposed at the sealant outlet end of the sealant bottle of the present invention. The two is plugged together to be connected, and the second bottle cap 8 slides in the first bottle cap 3. Through this structure, a retractable application can be achieved for the bottle caps of the sealant bottle when disassembling the used-up sealant bottle; that is, to enhance the flexibility of the disassembling operation. As shown in Figure 6, the second bottle cap 8 is totally inserted into the first bottle cap 3 in the non-extended state. The latter hence completely surrounds the second bottle cap 8 and presses close to the bottle body. In contrast, the first bottle cap 3 can slide relative to the second bottle cap 8 in an extended state (not shown) to enlarge its distance from the bottle body 1. The connection tube of sealant bottle can be turned collectively with the first bottle cap 3.

In the above-mentioned sealant bottle for tyre repair of vehicle, the connection tube of sealant bottle is comprised of a second tube section 42 arranged along the axial direction of the bottle body 1 and a first tube section 41 perpendicular to the second tube section 42. The outer surface of the first tube section 41 is provided with external threads so as to be connected with a sealant throat pipe for guiding the sealant into a tyre. The second tube section 42 passes through the central channel 82 of the second bottle cap 8 and is formed of a joint nozzle (as shown in the figure) at the end far away from the first tube section 42 so as to be inserted into and connected with the sealant hose 2. Based on this structural arrangement, the sealant bottle of the present invention cooperates with the air compressor to from a connection path to realize an effective supply of the sealant, wherein the connection path is as follows: sealant hose-connection tube of sealant bottle-sealant throat pipe. Further referring to Figure 5, the second tube section 42 of the connection tube of sealant bottle is provided with a retaining ring 43 for preventing the connection tube of sealant bottle from loosening outwards in the sliding process. Wherein, the outer diameter of the retaining ring is larger than the inner diameter of the central channel 82. Furthermore, a sealing ring (not shown) is arranged at the joint between the joint nozzle at the end of the second tube section 42 and the sealant hose 2, thereby preventing the sealant from leaking out during the sliding of the connection tube of sealant bottle.

What mentioned above is only the preferred embodiments of the present invention, which is not used to limit the present invention.

## Claims

1. A sealant bottle for tyre repair of vehicle, wherein comprising a bottle body (1) for holding sealant and a flexible sealant hose (2) arranged within the bottle body (1); a first bottle cap (3) and a second bottle cap (8) are disposed at an opening for outputting sealant of the bottle body (1), wherein the first bottle cap (3) completely surrounds the second bottle cap (8), **characterized in that** the second bottle cap (8) can slide within the first bottle cap (3); the sealant within the bottle body (1) is led out by combination of the sealant hose (2) and a connection tube of sealant bottle passing through the second bottle cap (8); the flexible sealant hose (2) is connected with a one-way valve at its one end; the one-way valve includes a valve body (51), a sealing plug (53) and a valve cover (52), while the valve cover (52) is arranged at one end of the valve body (51) that is far away from the sealant hose (2); the valve body (51) is arranged with a channel and a groove for guiding the sealant (511) inside, wherein the groove for guiding the sealant (511) connected to the channel is arranged at one end of the channel that is far away from the valve cover (52); the sealing plug (53) is arranged in the channel and it can move therein along the axial direction of the bottle body (1); the one-way valve is arranged with a gravitational shell (7) which surrounds the one-way valve, the channel has a length providing some moving space for the sealing plug (53) so as to eliminate a pressure change caused by the expansion and/or contraction of the air and sealant; during movement, the sealing plug always abuts against the wall of the channel so as to ensure a sealing environment inside the whole sealant bottle; and
wherein the gravitational shell has a specific gravity greater than a specific gravity of the flexible sealant hose.

2. The sealant bottle for tyre repair of vehicle of claim 1, wherein the connection tube of sealant bottle is comprised of a second tube section (42) arranged along the axial direction of the bottle body (1) and a first tube section (41) perpendicular to the second tube section (42); the second tube section (42) passes through the second bottle cap (8) and connects with the sealant hose (2).

3. The sealant bottle for tyre repair of vehicle of claim 2, wherein the second tube section (42) of the connection tube of sealant bottle is provided with a retaining ring (43) for preventing the connection tube of sealant bottle from loosening towards the outside of the bottle body in the sliding process.

4. The sealant bottle for tyre repair of vehicle of claim 1, wherein the second bottle cap (8) comprises a bottle cap body (81) and a central channel (82) arranged at the centre of the bottle cap body (81).

5. The sealant bottle for tyre repair of vehicle of claim 4, wherein the central channel (82) is inserted into the opening for outputting sealant of the bottle body (1); the inner surface of the bottle cap body (81) is provided with internal threads, and the bottle cap body (81) is matched and connected with external threads provided at the opening for outputting sealant of the bottle body (1).

6. The sealant bottle for tyre repair of vehicle of claim 1, wherein the gravitational shell (7) is in threaded connection with the one-way valve.

7. The sealant bottle for tyre repair of vehicle of claim 1, wherein the gravitational shell (7) is connected with the sealant hose (2) by a joint nozzle (71) protruding from the end of the gravitational shell (7).

8. The sealant bottle for tyre repair of vehicle of claim 6, wherein the gravitational shell (7) is connected with the sealant hose (2) by a joint nozzle (71) protruding from the end of the gravitational shell (7).

9. The sealant bottle for tyre repair of vehicle of claim 1, wherein the inner diameter of the channel of the valve body (51) is equal to the outer diameter of the sealing plug (53).

10. The sealant bottle for tyre repair of vehicle of claim 1, wherein an end plate of the valve cover (53) is provided with three projections (521); the projections (521) are inserted into the corresponding slots (512) at one end of the valve body (51) that is far away from the sealant hose (2), so that the valve cover (52) is connected with the valve body (51).

11. The sealant bottle for tyre repair of vehicle of claim 1, wherein the bottle body (1) also comprises an air inlet end; an opening for inputting air at the air inlet end of the bottle body is provided with a bottle stopper (9), while a sealing washer is arranged between the bottle stopper (9) and the opening for inputting air so as to prevent the leakage of the sealant.

## Patentansprüche

1. Dichtmittelflasche zur Reifenreparatur eines Fahrzeugs, aufweisend einen Flaschenkörper (1) zum Vorhalten von Dichtmittel und einen flexiblen Dichtmittelschlauch (2), der innerhalb des Flaschenkörpers (1) angeordnet ist; wobei eine erste Flaschenkappe (3) und eine zweite Flaschenkappe (8) an einer Öffnung zum Ausgeben des Dichtmittels des Flaschenkörpers (1) vorgesehen sind, wobei die erste Flaschenkappe (3) die zweite Flaschenkappe (8) vollständig umgibt,
**dadurch gekennzeichnet, dass**
sich die zweite Flaschenkappe (8) innerhalb der ersten Flaschenkappe (3) verschieben kann; das Dichtmittel innerhalb des Flaschenkörpers (1) durch eine Kombination aus dem Dichtmittelschlauch (2) und einem durch die zweite Flaschenkappe (8) verlaufenden Verbindungsrohr der Dichtmittelflasche herausgelassen wird;
der flexible Dichtmittelschlauch (2) an seinem einen Ende mit einem Einwegventil verbunden ist; das Einwegventil einen Ventilkörper (51), einen Dichtstopfen (53) und einen Ventildeckel (52) umfasst, während der Ventildeckel (52) an einem Ende des Ventilkörpers (51) angeordnet ist, welches vom Dichtmittelschlauch (2) weit entfernt ist; der Ventilkörper (51) mit einem Kanal und einer Rille zum Führen des Dichtmittels (511) darin eingerichtet ist, wobei die mit dem Kanal verbundene Rille zum Führen des Dichtmittels (511) an einem Ende des Kanals angeordnet ist, das vom Ventildeckel (52) weit entfernt ist; der Dichtstopfen (53) in dem Kanal angeordnet ist und sich darin entlang der Axialrichtung des Flaschenkörpers (1) bewegen kann; das Einwegventil mit einer Schwerkrafthülse (7) ausgestaltet ist, die das Einwegventil umgibt, der Kanal eine Länge hat, die einen gewissen Bewegungsraum für den Dichtstopfen (53) bereitstellt, um so eine Druckänderung zu beseitigen, die durch Expansion und/oder Kontraktion der Luft und des Dichtmittels verursacht wird; wobei sich während der Bewegung der Dichtstopfen stets an der Wandung des Kanals abstützt, um eine Dichtungsumgebung im Inneren der gesamten Dichtmittelflasche zu gewährleisten; und
wobei die Schwerkrafthülse ein spezifisches Gewicht hat, das größer ist als ein spezifisches Gewicht des flexiblen Dichtmittelschlauchs.

2. Dichtmittelflasche zur Reifenreparatur eines Fahrzeugs nach Anspruch 1, wobei das Verbindungsrohr der Dichtmittelflasche aus einem zweiten Rohrabschnitt (42), der entlang der Axialrichtung des Flaschenkörpers (1) angeordnet ist, und einem ersten Rohrabschnitt (41) senkrecht zum zweiten Rohrabschnitt (42) besteht; wobei der zweite Rohrabschnitt (42) durch die zweite Flaschenkappe (8) verläuft und sich mit dem Dichtmittelschlauch (2) verbindet.

3. Dichtmittelflasche zur Reifenreparatur eines Fahrzeugs nach Anspruch 2, wobei der zweite Rohrabschnitt (42) des Verbindungsrohrs der Dichtmittelflasche mit einem Haltering (43) versehen ist, um zu verhindern, dass sich beim Verschiebevorgang das Verbindungsrohr der Dichtmittelflasche zur Außenseite des Flaschenkörpers hin ablöst.

4. Dichtmittelflasche zur Reifenreparatur eines Fahrzeugs nach Anspruch 1, wobei die zweite Flaschenkappe (8) einen Flaschenkappenkörper (81) und einen zentralen Kanal (82) aufweist, der in der Mitte des Flaschenkappenkörpers (81) angeordnet ist.

5. Dichtmittelflasche zur Reifenreparatur eines Fahrzeugs nach Anspruch 4, wobei der zentrale Kanal (82) in die Öffnung zum Ausgeben des Dichtmittels des Flaschenkörpers (1) eingeführt ist; wobei die Innenfläche des Flaschenkappenkörpers (81) mit einem Innengewinde versehen ist und der Flaschenkappenkörper (81) mit einem Außengewinde gepaart und verbunden ist, das an der Öffnung zum Ausgeben des Dichtmittels des Flaschenkörpers (1) vorgesehen ist.

6. Dichtmittelflasche zur Reifenreparatur eines Fahrzeugs nach Anspruch 1, wobei die Schwerkrafthülse (7) mit dem Einwegventil in Gewindeverbindung steht.

7. Dichtmittelflasche zur Reifenreparatur eines Fahrzeugs nach Anspruch 1, wobei die Schwerkrafthülse (7) mit dem Dichtmittelschlauch (2) über einen Verbindungsstutzen (71) verbunden ist, der vom Ende der Schwerkrafthülse (7) absteht.

8. Dichtmittelflasche zur Reifenreparatur eines Fahrzeugs nach Anspruch 6, wobei die Schwerkrafthülse (7) mit dem Dichtmittelschlauch (2) über einen Verbindungsstutzen (71) verbunden ist, der vom Ende der Schwerkrafthülse (7) absteht.

9. Dichtmittelflasche zur Reifenreparatur eines Fahrzeugs nach Anspruch 1, wobei der Innendurchmesser des Kanals des Ventilkörpers (51) gleich dem Außendurchmesser des Dichtstopfens (53) ist.

10. Dichtmittelflasche zur Reifenreparatur eines Fahrzeugs nach Anspruch 1, wobei eine Endplatte des Ventildeckels (53) mit drei Vorsprüngen (521) versehen ist; wobei die Vorsprünge (521) in die entsprechenden Aussparungen (512) an einem Ende des Ventilkörpers (51) eingeführt sind, das vom Dichtmittelschlauch (2) weit entfernt ist, so dass der Ventildeckel (52) mit dem Ventilkörper (51) verbunden ist.

11. Dichtmittelflasche zur Reifenreparatur eines Fahrzeugs nach Anspruch 1, wobei der Flaschenkörper (1) auch ein Lufteinlassende aufweist; eine Öffnung zum Einbringen von Luft am Lufteinlassende des Flaschenkörpers mit einem Flaschenanschlag (9) versehen ist, während eine Dichtungsscheibe zwischen dem Flaschenanschlag (9) und der Öffnung zum Einbringen von Luft angeordnet ist, um das Austreten des Dichtmittels zu verhindern.

## Revendications

1. Bouteille d'agent d'étanchéité pour réparation de pneu de véhicule, comprenant un corps de bouteille (1) destiné à contenir un agent d'étanchéité et un tuyau d'agent d'étanchéité (2) flexible agencé à l'intérieur du corps de bouteille (1) ; un premier capuchon de bouteille (3) et un deuxième capuchon de bouteille (8) sont disposés à une ouverture de sortie de l'agent d'étanchéité du corps de bouteille (1), sachant que le premier capuchon de bouteille (3) entoure entièrement le deuxième capuchon de bouteille (8),
**caractérisé en ce que** le deuxième capuchon de bouteille (8) peut coulisser à l'intérieur du premier capuchon de bouteille (3) ; l'agent d'étanchéité à l'intérieur du corps de bouteille (1) est guidé vers l'extérieur par une combinaison du tuyau d'agent d'étanchéité (2) et d'un tube de raccordement de bouteille d'agent d'étanchéité qui passe à travers le deuxième capuchon de bouteille (8) ;
le tuyau d'agent d'étanchéité (2) flexible est raccordé à une vanne à une voie à l'une de ses extrémités ; la vanne à une voie inclut un corps de vanne (51), un bouchon d'étanchéité (53) et un couvercle de vanne (52), tandis que le couvercle de vanne (52) est agencé à une extrémité du corps de vanne (51) qui est éloignée du tuyau d'agent d'étanchéité (2) ; le corps de vanne (51) est agencé avec un canal et une rainure pour guider l'agent d'étanchéité (511) à l'intérieur, sachant que la rainure de guidage de l'agent d'étanchéité (511) raccordée au canal est agencée à une extrémité du canal qui est éloignée du couvercle de vanne (52) ; le bouchon d'étanchéité (53) est agencé dans le canal et peut se déplacer dans celui-ci le long de la direction axiale du corps de bouteille (1) ; la vanne à une voie est agencée avec une enveloppe gravitationnelle (7) qui entoure la vanne à une voie, le canal a une longueur fournissant quelque espace de déplacement pour le bouchon d'étanchéité (53) de manière à éliminer un changement de pression causé par la dilatation et/ou la contraction de l'air et de l'agent d'étanchéité ; pendant le mouvement, le bouchon d'étanchéité est toujours en butée contre la paroi du canal de manière à assurer un environnement d'étanchéité à l'intérieur de l'ensemble de la bouteille d'agent d'étanchéité ; et
sachant que l'enveloppe gravitationnelle a une gravité spécifique supérieure à une gravité spécifique du tuyau d'agent d'étanchéité flexible.

2. La bouteille d'agent d'étanchéité pour réparation de pneu de véhicule de la revendication 1, sachant que le tube de raccordement de la bouteille d'agent d'étanchéité est composé d'une deuxième section de tube (42) agencée le long de la direction axiale du corps de bouteille (1) et d'une première section de tube (41) perpendiculaire à la deuxième section de tube (42) ; la deuxième section de tube (42) passe à travers le deuxième capuchon de bouteille (8) et se raccorde au tuyau d'agent d'étanchéité (2).

3. La bouteille d'agent d'étanchéité pour réparation de pneu de véhicule de la revendication 2, sachant que la deuxième section de tube (42) du tube de raccordement de la bouteille d'agent d'étanchéité est pourvue d'une bague de retenue (43) destinée à empêcher le tube de raccordement de la bouteille d'agent d'étanchéité de se détacher vers l'extérieur du corps de bouteille lors du processus de coulissement.

4. La bouteille d'agent d'étanchéité pour réparation de pneu de véhicule de la revendication 1, sachant que le deuxième capuchon de bouteille (8) comprend un corps de capuchon de bouteille (81) et un canal central (82) agencé au centre du corps de capuchon de bouteille (81).

5. La bouteille d'agent d'étanchéité pour réparation de pneu de véhicule de la revendication 4, sachant que le canal central (82) est inséré dans l'ouverture de sortie de l'agent d'étanchéité du corps de bouteille (1) ; la surface intérieure du corps de capuchon de bouteille (81) est pourvue de filetages internes, et le corps de capuchon de bouteille (81) est adapté et raccordé à des filetages externes prévus à l'ouverture de sortie de l'agent d'étanchéité du corps de bouteille (1).

6. La bouteille d'agent d'étanchéité pour réparation de pneu de véhicule de la revendication 1, sachant que l'enveloppe gravitationnelle (7) est en raccordement fileté avec la vanne à une voie.

7. La bouteille d'agent d'étanchéité pour réparation de pneu de véhicule de la revendication 1, sachant que l'enveloppe gravitationnelle (7) est raccordée au tuyau d'agent d'étanchéité (2) par une tuyère de jonction (71) dépassant de l'extrémité de l'enveloppe gravitationnelle (7).

8. La bouteille d'agent d'étanchéité pour réparation de pneu de véhicule de la revendication 6, sachant que l'enveloppe gravitationnelle (7) est raccordée au tuyau d'agent d'étanchéité (2) par une tuyère de jonction (71) dépassant de l'extrémité de l'enveloppe gravitationnelle (7).

9. La bouteille d'agent d'étanchéité pour réparation de pneu de véhicule de la revendication 1, sachant que le diamètre intérieur du canal du corps de vanne (51) est égal au diamètre extérieur du bouchon d'étanchéité (53).

10. La bouteille d'agent d'étanchéité pour réparation de pneu de véhicule de la revendication 1, sachant qu'une plaque d'extrémité du couvercle de vanne (53) est pourvue de trois saillies (521) ; les saillies (521) sont insérées dans les fentes (512) correspondantes à une extrémité du corps de vanne (51) qui est éloignée du tuyau d'agent d'étanchéité (2), de sorte que le couvercle de vanne (52) soit raccordé au corps de vanne (51).

11. La bouteille d'agent d'étanchéité pour réparation de pneu de véhicule de la revendication 1, sachant que le corps de bouteille (1) comprend également une extrémité d'entrée d'air ; une ouverture d'entrée d'air à l'extrémité d'entrée d'air du corps de bouteille est pourvue d'une butée de bouteille (9), tandis qu'une rondelle d'étanchéité est agencée entre la butée de bouteille (9) et l'ouverture d'entrée d'air de manière à empêcher la fuite de l'agent d'étanchéité.
